# EUROPÄISCHE PATENTSCHRIFT

(11) **EP 3 930 890 B1**
(45) Veröffentlichungstag und Bekanntmachung des Hinweises auf die Patenterteilung: **03.04.2024**
(21) Anmeldenummer: 20711042.0
(22) Anmeldetag: 26.02.2020
(51) Int. Cl.: B01J 19/24

(54) **MEMBRANREAKTOR UND VERFAHREN ZUR DURCHFÜHRUNG VON GLEICHGEWICHTSREAKTIONEN**
MEMBRANE REACTOR AND METHOD FOR CARRYING OUT BALANCED REACTIONS
RÉACTEUR À MEMBRANE ET PROCÉDÉ DE RÉALISATION DE RÉACTIONS D'ÉQUILIBRE

(30) Priorität: 26.02.2019 DE 102019104902
(43) Veröffentlichungstag der Anmeldung: 05.01.2022
(73) Patentinhaber: Fraunhofer-Gesellschaft zur Förderung der angewandten Forschung e.V., 80686 München (DE); MUW SCREENTEC Filter- und Präzisionstechnik aus Metall GmbH, 29378 Wittingen (DE)
(72) Erfinder: REGER-WAGNER, Norman, 07629 Hermsdorf (DE); RICHTER, Jörg, 07629 Hermsdorf (DE); JÄGER, Benjamin, 07629 Hermsdorf (DE); MARTIN, Dirk, 99086 Erfurt (DE); GRÜTZNER, Jörg, 99086 Erfurt (DE)
(74) Vertreter: Gleim Petri Patent- und Rechtsanwaltspartnerschaft mbB
(86) Internationale Anmeldenummer: PCT/DE2020/100136
(87) Internationale Veröffentlichungsnummer: WO 2020/173525

(56) Entgegenhaltungen:
- EP-A2- 0 167 101
- WO-A1-2015/021501
- US-A- 5 449 848
- US-A1- 2011 120 880
- US-A1- 2012 034 138
- US-A1- 2016 215 224

## Beschreibung

Die Erfindung betrifft einen passiv selbstregelnden Membranreaktor zur Durchführung von Gleichgewichtsreaktionen und ein Verfahren für Gleichgewichtsreaktionen. Membranreaktoren dienen der Erhöhung von Selektivität oder Ausbeute von chemischen Reaktionen, indem eine Komponente durch Membranen entweder selektiv dosiert oder selektiv abgetrennt wird. Daher sind Membranreaktoren eine elegante Methode, die Effizienz von chemischen Prozessen deutlich zu steigern.

Bei konventionellen Membranreaktoren erfolgt die Edukt-Dosierung durch Steuerung von Volumen- bzw. Masseströmen. Diese müssen genau auf Katalysator- und Membranleistung ausgelegt werden. Es existiert keine Regel/Steuerungsgröße, anhand der die einstellbaren Parameter zusammen optimiert werden können. Es ist entsprechend schwierig, einen Membranreaktor optimal auszulegen bzw. dessen optimalen Betriebspunkt zu ermitteln. Dabei sind die Anforderungen an die Membran sehr hoch. Sie muss selektiv permeabel für eine Komponente und möglichst wenig permeabel für alle anderen beteiligten Komponenten sein. Aufgrund dieser hohen Anforderungen an die Membran führen selbst geringfügige Abweichungen in den Leistungsdaten zu einer deutlichen Änderung der Reaktorleistung. WO2015/021501 offenbart einen Membranreaktor zur Durchführung von Gleichgewichtsreaktionen.

Der Erfindung liegt die Aufgabe zugrunde, eine Möglichkeit anzugeben, wodurch eine einfache und effiziente Betreibung eines Membranreaktors realisiert werden kann. Erfindungsgemäß wird die Aufgabe mit einem passiv selbstregelnden Membranreaktor zur Durchführung von Gleichgewichtsreaktionen mit wenigstens einem ersten und einem zweiten Edukt und einem ersten und einem zweiten Produkt, wobei der Membranreaktor eine Membran aufweist, die einen Reaktionsraum von einem Permeatraum trennt und für ein zweites Edukt und ein zweites Produkt permeabel sowie für ein erstes Produkt nicht oder nur gering permeabel ist, dadurch gelöst, dass das erste Edukt druckbeaufschlagt über einen Reaktionsraumeingang dem Reaktionsraum zuführbar ist, dass das zweite Edukt druckbeaufschlagt über einen Permeatraumeingang dem Permeatraum zuführbar ist, dass der Reaktionsraum einen ersten Abtrennraum nicht unmittelbar an die Membran angrenzend aufweist, dass der Permeatraum einen zweiten Abtrennraum nicht unmittelbar an die Membran angrenzend aufweist, dass das erste Produkt über einen Reaktionsraumausgang aus dem ersten Abtrennraum abführbar ist und dass das zweite Produkt über einen Permeatraumausgang aus dem zweiten Abtrennraum abführbar ist.

Die Aufgabe wird ferner durch ein Verfahren für Gleichgewichtsreaktionen mit wenigstens einem ersten und einem zweiten Edukt und wenigstens einem ersten und einem zweiten Produkt mittels einer Membran mit einer Permeatseite und einer Retentatseite, wobei die Membran zwischen einem Reaktionsraum und einem Permeatraum angeordnet wird und für mindestens das zweite Edukt und das zweite Produkt permeabel ist, jedoch für das erste Produkt nicht permeabel ist, und die Edukte und Produkte auf der Permeatseite und Retentatseite voneinander trennbar sind, dadurch gelöst, dass das zweite Edukt druckbeaufschlagt dem Permeatraum zugeführt wird, welches durch die Membran in den Reaktionsraum permeiert und dort mit dem dem Reaktionsraum druckbeaufschlagt zugeführten ersten Edukt unter Beteiligung eines Katalysators reagiert, so dass das erste Produkt und das zweite Produkt entstehen, wobei das erste Produkt aus dem Reaktionsraum über einen ersten Abtrennraum und das zweite Produkt, welches durch die Membran in den Permeatraum permeiert, aus dem Permeatraum über einen zweiten Abtrennraum abgeführt wird. Der Membranreaktor wird im Anspruch 1, gefolgt von den Ansprüchen 2-5, beansprucht. Das Verfahren wird im Anspruch 6, gefolgt von den Ansprüchen 7-10 beansprucht.

Der wesentliche Vorteil des erfindungsgemäßen Verfahrens für Gleichgewichtsreaktionen mit wenigstens einem ersten und einem zweiten Edukt und wenigstens einem ersten und einem zweiten Produkt mittels einer Membran besteht darin, dass die Eduktdosierung nicht über Volumen- bzw. Massenstrom erfolgt, sondern dass die Edukte druckgeregelt zugegeben werden.

Die Zugabe des zweiten Edukts erfolgt druckgeregelt, es wird allerdings auf der Rückseite bzw. Permeatseite der Membran eingespeist. Der Druck ergibt sich hier als Summe aus dem gewünschten Partialdruck im Reaktionsraum und einem Transmembranendruck als Triebkraft zum Transport in den Reaktionsraum.

Die Zugabe des ersten Edukts erfolgt ebenfalls druckgeregelt auf den Gesamtdruck, bei dem die Reaktion stattfinden soll. Dadurch ergibt sich ein Partialdruck des ersten Edukts als Differenz aus dem vorgegebenen Gesamtdruck vermindert um den Partialdruck des zweiten Edukts. Im Reaktionsraum werden die beiden Edukte bis zum chemischen Gleichgewicht zu den beiden Produkten umgesetzt. Entsprechend steigen die Partialdrücke der beiden Produkte; die Partialdrücke der beiden Edukte sinken dadurch. Dies geschieht in der Regel, aber nicht zwingend, durch die Anwesenheit von Katalysatoren. Die zu verwendende Membran trennt den Reaktionsraum vom Permeatraum und ist für das zweite Edukt und das zweite Produkt permeabel. Sie kann für das erste Edukt permeabel, teilweise permeabel oder nicht permeabel sein. Sie muss aber zwingend für das erste Produkt nicht bzw. nur sehr gering permeabel sein. Diese Eigenschaften werden häufig von einem einzelnen Membrantyp erreicht. Zum Erreichen der gewünschten Membraneigenschaften können aber auch Membranen aus verschiedenen Membranmaterialien kombiniert werden.

Aufgrund der vorherrschenden partiellen Transmembranendrücke permeiert:
- das zweite Edukt aus dem Permeatraum in den Reaktionsraum. Dies ist für die Prozesssteuerung gewünscht, wie schon bei der Eduktdosierung beschrieben. Das im Reaktionsraum abreagierte zweite Edukt wird durch die Membran aufgrund der durch die Reaktion entstehenden Partialdruckdifferenz passiv und selbstregelnd nachdosiert.
- das zweite Produkt aus dem Reaktionsraum in den Permeatraum. Dadurch verschiebt sich das chemische Gleichgewicht im Reaktionsraum wieder zu den Produkten. Dies ist der Kern der Arbeitsweise von erfindungsgemäßen Membranreaktoren.
- Das erste Edukt kann - je nach Membraneigenschaften - ebenfalls in den Permeatraum übertreten. Idealerweise - aber nicht notwendigerweise - ist die Membran aber für das erste Edukt dicht. Wenn das erste Edukt dennoch permeiert, dann darf es nicht (oder nur zu geringen Teilen) mit dem zweiten Produkt abgetrennt bzw. aus dem Permeatraum herausgeführt und somit dem Prozess entzogen werden. Dadurch reichert sich das erste Edukt maximal bis zum Gleichgewichtspartialdruck im Permeatraum an, wodurch die Permeation zum Erliegen kommt und kein weiteres erstes Edukt der Reaktion verloren geht. Dies senkt das notwendige Anforderungsprofil an die Membraneigenschaften weiter.

Auf der Reaktionsseite wird das Gasgemisch aus dem Reaktionsraum in einen nachgelagerten Bereich, dem Abtrennraum, zur Abtrennung weitergeleitet. Das erste Produkt kann durch Auskondensieren besonders einfach abgetrennt werden. Grundsätzlich sind aber auch andere Trennverfahren denkbar, beispielsweise Gaswäschen oder Membranen. Durch die Abtrennung fließt das erste Produkt aufgrund des entstehenden Konzentrationsgradienten kontinuierlich aus dem Reaktionsraum nach. Idealerweise werden die beiden Edukte und das zweite Produkt nicht aus dem Reaktionsraum herausgeführt. Im Abtrennbereich verbleibt ein konstanter Partialdruck dieser Komponenten, der im sich einstellenden Gleichgewicht dem Partialdruck im Reaktionsraum entspricht. In Folge strömt kein zweites Produkt in diese Richtung nach. Bei einer nicht idealen Abtrennung können geringe Anteile von den beiden Edukten und/oder dem zweiten Produkt mit dem ersten Produkt als Verunreinigung mit abgetrennt werden. Hier ist eine nachgelagerte Produktaufbereitung denkbar, sofern für den Prozess ökonomisch sinnvoll. Für eine Unterstützung der Stoffströmung in Richtung der Abscheidestelle kann eine Pumpe eingesetzt werden, die die nicht abgetrennten Stoffe dem Prozess zusammen mit der druckgeregelten Einspeisung des ersten Edukts wieder zuführt.

Die für die Wiedererwärmung dieser nicht abgetrennten Komponenten bzw. für eine Erwärmung des ersten Edukts notwendige Energie bei der Einspeisung kann über einen Wärmetauscher aus dem abzukühlenden Produktstrom gewonnen werden. Analog verhält es sich mit der Abtrennung des zweiten Produkts von den beiden Edukten aus dem Permeatraum (und auch der Wärmerückgewinnung). Hier stellt sich ein Gleichgewichtsdruck am ersten Edukt ein. Sobald sich dieses Gleichgewicht eingestellt hat, geht kein erstes Edukt mehr über die Membran verloren. Durch die Rückführung des zweiten Edukts, aus dem das zweite Produkt auskondensiert wurde, in den Permeatraum, sinkt dort der Partialdruck des zweiten Produkts. Dadurch entsteht ein höherer partieller Transmembranendruck bezüglich des zweiten Produkts, es wird kontinuierlich aus dem Reaktionsraum abgeführt und die Gleichgewichtsreaktion wird so weiter vorangetrieben.

Zusammenfassend ergeben sich folgende Vorteile für ein erfindungsgemäßes Verfahren zur Durchführung einer Gleichgewichtsreaktion
- Die Dosierung der Edukte erfolgt druckgeregelt; verbrauchte Edukte werden genau entsprechend ihres Verbrauchs (Partialdruckabfall) nachdosiert. Dies erfolgt passiv; es ist keine aktive Regelung notwendig.
- Der Einspeisedruck des ersten Edukts wird durch die gewünschten Prozessbedingungen definiert; dies ist in der Regel der Druck, bei dem das gewünschte Produkt mit der höchsten Selektivität gebildet wird. Diese Größe wird vorgegeben.
- Der Einspeisedruck des zweiten Edukts stellt das Verhältnis der Partialdrücke vom ersten und zweiten Edukt ein. Er ergibt sich auf Basis der Reaktionsgeschwindigkeit, welche durch Messung des Stoffstroms vom ersten Edukt oder zweiten Edukt bestimmbar ist. Die Regelung erfolgt direkt rückgekoppelt, sie ist also ebenfalls passiv ausführbar.
- Bei Verwendung eines Katalysators ist das Verhältnis von Membranfläche zu Katalysatormasse aufeinander zu optimieren (Reaktordesign). Bei zu geringer Membranfläche wird der Katalysator nicht ausgereizt; bei zu geringer Katalysatormenge wird die Membranfläche nicht voll ausgenutzt. Für ein gegebenes Verhältnis von Membranfläche zu Katalysatormasse und Reaktionsdruck wird sich aufgrund der beschriebenen passiven Regelung automatisch der optimale Betriebspunkt einstellen.

Ein weiterer Vorteil ergibt sich beim Start des Prozesses. Es besteht hier die Möglichkeit, den Volumen- bzw. Massestrom eines Eduktes temporär zu verringern, wodurch die Reaktion langsamer angefahren wird, um exo- bzw. endotherm getriebene Temperaturstöße in Folge sprunghaften Starts der Reaktion zu vermindern. Auf diese Weise kann die durch Exothermie bzw. Endothermie entstehende Temperaturerhöhung bzw. -erniedrigung begrenzt werden und durch einen entsprechenden Wärmestrom (Kühlung bzw. Heizung) frühzeitig kompensiert werden.

Nachfolgend soll die Erfindung anhand von Ausführungsbeispielen mithilfe einer Zeichnung näher erläutert werden. Hierzu zeigt:

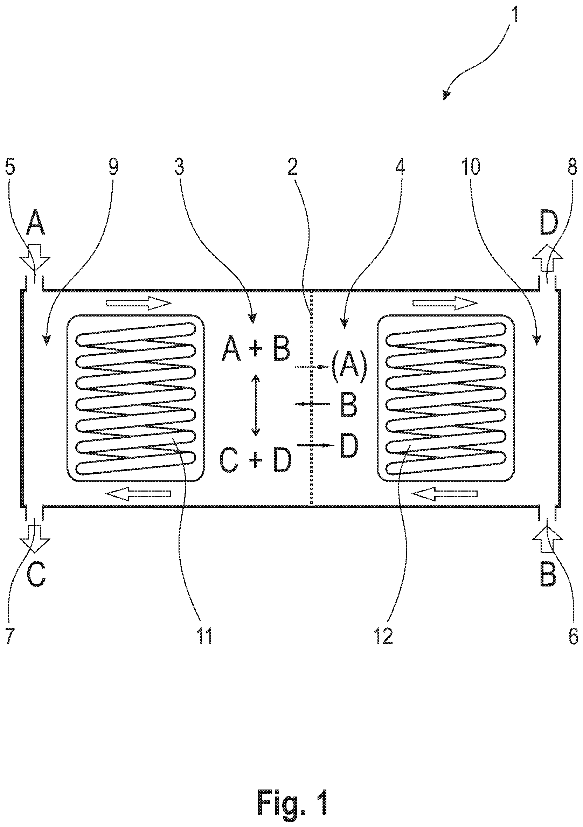

- Fig. 1: eine schematische Darstellung eines erfindungsgemäß passiv betriebenen Membranreaktors.

In Fig. 1 sind die wesentlichen Komponenten des erfindungsgemäßen Membranreaktors 1 mit der Membran 2, die den Reaktionsraum 3 und den Permeatraum 4 trennt, dem Reaktionsraumeingang 5, dem Permeatraumeingang 6, dem Reaktionsraumausgang 7, dem Permeatraumausgang 8, dem ersten Abtrennraum 9 und dem zweiten Abtrennraum 10 zu erkennen. Ferner ist zu erkennen, dass im ersten Abtrennraum 9 ein erster Wärmetauscher 11 und im zweiten Abtrennraum 10 ein zweiter Wärmetauscher 12 angeordnet ist. Zur Aufrechterhaltung des ersten Kreislaufes im ersten Abtrennraum 9 ist eine nicht dargestellte erste Pumpe oder ein erstes Gebläse und zur Aufrechterhaltung des zweiten Kreislaufes im zweiten Abtrennraum 10 ist eine ebenfalls nicht dargestellte zweite Pumpe oder ein zweites Gebläse angeordnet. Die Dosierung eines ersten Edukts A erfolgt druckgesteuert über den Reaktionsraumeingang 5 und die Dosierung des zweiten Edukts B erfolgt ebenfalls druckgesteuert über den Permeatraumeingang 6. Die Abführung des ersten Produktes C erfolgt temperaturgesteuert über den Reaktionsraumausgang 7 und die des zweiten Produktes D erfolgt ebenfalls temperaturgesteuert über den Permeatraumausgang 8. Die Pumpen sorgen für die nötigen Kreisläufe, wobei zum einen das erste Produkt C von der Membran 2 auf der Retentatseite weggebracht und gleichzeitig das mit abgeführte erste Edukt A wieder zur Membran 2 zurückgebracht werden sollen. Zum anderen soll das zweite Produkt D von der Membran 2 auf der Permeatseite weggeführt und dem Prozess entzogen werden; aber gleichzeitig soll das zweite Edukt B an die Membran 2 geführt werden.

### Ausführungsbeispiel 1

Methanolsynthese:

3H₂ + CO₂ <-> CH₃OH + H₂O

Hierbei entspricht CO₂ dem ersten Edukt A, H₂ dem zweiten Edukt B, CH₃OH dem ersten Produkt C und H₂O dem zweiten Produkt D.

Die verwendete Membran 2 ist hoch permeabel für Wasserstoff und Wasser, gering permeabel für Kohlendioxid und praktisch dicht für Methanol. In diesem Ausführungsbeispiel werden einzelne außenbeschichtete, kohlenstoffbasierte Membranen 2 auf einem porösen Träger mit einer Länge von 105 mm und einem Außendurchmesser von 10 mm verwendet.

Auf der Reaktionsseite werden Methanol und ein Teil Wasser als erstes und zweites Produkt C und D auskondensiert; nicht kondensierter Wasserstoff und Kohlendioxid werden über den ersten Wärmetauscher 11, der sich gemäß Fig. 1 im ersten Abtrennraum 9 befindet und als erster Kreislauf schematisch dargestellt ist, dem Prozess wieder zugeführt. Auf der Permeatseite wird Wasser ohne Methanol auskondensiert; nicht kondensiertes Kohlendioxid (geringe Anteile) und Wasserstoff werden über einen zweiten Wärmetauscher 12, der sich gemäß Fig. 1 im zweiten Abtrennraum 10 befindet und als zweiter Kreislauf schematisch dargestellt ist, dem Pemeatraum 4 wieder zugeführt. Durch den zweiten Kreislauf wird das Wasser aus dem Permeatraum 4 abtransportiert, was die Permeation von Wasser durch die Membran 2 hindurch unterstützt und wodurch das Reaktionsgleichgewicht durch den kontinuierlichen Abtransport von Wasser zugunsten der Produkte C, D verschoben wird. Der Gesamtdruck der Reaktion wird über die Kohlendioxiddosierung auf 50 bar vorgegeben. Der Reaktionsraum 3 wird auf 280 °C erwärmt. Der Wasserstoffdruck wird eingangs auf 40 bar vorgegeben (37,5 bar initialer Wasserstoffpartialdruck für ein Reaktionsverhältnis Wasserstoff zu Kohlendioxid von 3:1 plus 2,5 bar Transmembranendruck für die Wasserstoffpermeation).

Als Katalysator werden 10 g eines kupferbasierten Trägerkatalysators auf Aluminiumoxid genutzt und als Schüttung im Reaktionsraum 3 appliziert. Dieser wird in einem Wasserstoff-/Stickstoffstrom (1:9) entsprechend voraktiviert. Auf der Reaktionsseite wird ein Kohlendioxiddruck von 50 barÜ vorgelegt und der Reaktionsraum 3 auf 280 °C aufgeheizt. Der zu dosierende Wasserstoff wird auf 40 barÜ eingeregelt und dessen Zustrom bzw. der Druckaufbau wird mittels eines Nadelventils begrenzt. Der Start der Reaktion in Folge permeierenden Wasserstoffs äußert sich in einer Temperaturerhöhung im Reaktionsraum 3 bis auf ca. 300 °C und in beginnender Kondensatbildung zunächst im ersten Abtrennraum 9 der Reaktionsseite, gefolgt durch Kondensatbildung durch abgetrenntes Reaktionswasser auf der Wasserstoffseite. Das dynamische Reaktionsgleichgewicht des Systems ist eingestellt, wenn der Wasserstoffdruck seine Zielgröße von 40 barÜ erreicht hat. Hierbei werden Produktivitäten von ca. 14 g/h Methanol erreicht, gegenüber ca. 9,5 g/h Methanol im vergleichbaren, konventionellen Rohrreaktor bei gleicher Katalysatormasse und vergleichbaren Reaktionsbedingungen von 50 barÜ Reaktionsdruck und 300 °C Reaktionstemperatur.

### Ausführungsbeispiel 2

Methanolreforming:

CH₃OH + H₂O <-> 3H₂ + CO₂

Hierbei entspricht CH₃OH dem ersten Edukt A, H₂O dem zweiten Edukt B, CO₂ dem ersten Produkt C und H₂ dem zweiten Produkt D.

Die verwendete Membran 2 ist hoch permeabel für Wasser und Wasserstoff, gering permeabel für Kohlendioxid und praktisch dicht für Methanol.

Als Katalysator werden 10 g eines kupferbasierten Trägerkatalysators auf Aluminiumoxid genutzt und als Schüttung im Reaktionsraum 3 appliziert. Dieser wird in einem Wasserstoff-/Stickstoffstrom (1:9) entsprechend voraktiviert. Auf der Reaktionsseite wird ein Methanoldampfdruck von 50 barÜ vorgelegt und der Reaktionsraum 3 auf 300 °C aufgeheizt. Der zu dosierende Wasserdampf wird auf 30 barÜ eingeregelt und dessen Zustrom bzw. der Druckaufbau wird mittels eines Nadelventils begrenzt. Kondensiertes zweites Edukt B wird nach Kompression mittels Flüssigkeitspumpe und erneuter Verdampfung wieder eingespeist. Der Start der Reaktion in Folge permeierenden Wasserdampfes äußert sich in einer Temperaturerniedrigung im Reaktionsraum 3 bis auf ca. 270 °C und in einer Detektion von Kohlendioxid auf der Reaktionsseite. Das dynamische Reaktionsgleichgewicht des Systems ist eingestellt, wenn der Wasserdampfdruck seine Zielgröße von 30 barÜ erreicht hat. Hierbei konnten Wasserstoffproduktivitäten von 1,08 mol/h, gegenüber 0,41 mol/h Wasserstoff im vergleichbaren, konventionellen Rohrreaktor bei gleicher Katalysatormasse und vergleichbaren Reaktionsbedingungen von 50 barÜ Reaktionsdruck und 275 °C Reaktionstemperatur sowie einem Methanol-Wasserdampfverhältnis von 1:5 erreicht werden.

Das erfindungsgemäße Verfahren ist auch anwendbar für Methansynthese

4H₂ + CO₂ <-> CH₄ + 2H₂O

oder bei der Wandlung eines Synthesegases zu Kohlenwasserstoffen

(x+y/2)H₂ + xCO <-> CₓH_{y} + H₂O

oder bei der Wandlung eines Synthesegases zu Ethanol

4H₂ + 2CO <-> C₂H₅OH + H₂O

oder bei einer Oxidativen Dehydrierung von Propan zu Propen

C₃H₈ + 1/2O₂ <-> C₃H₆ + H₂O

oder bei einer Oxidativen Dehydrierung von Ethylbenzol zu Styrol

C₈H₁₀ + 1/2O₂ <-> C₈H₈ + H₂O,

wobei die Aufzählung nicht abschließend zu verstehen ist.

### Bezugszeichenliste

- 1: Membranreaktor
- 2: Membran
- 3: Reaktionsraum
- 4: Permeatraum
- 5: Reaktionsraumeingang
- 6: Permeatraumeingang
- 7: Reaktionsraumausgang
- 8: Permeatraumausgang
- 9: erster Abtrennraum
- 10: zweiter Abtrennraum
- 11: erster Wärmetauscher
- 12: zweiter Wärmetauscher
- A: erstes Edukt
- B: zweites Edukt
- C: erstes Produkt
- D: zweites Produkt

## Patentansprüche

1. Passiv selbstregelnder Membranreaktor (1) zur Durchführung von Gleichgewichtsreaktionen mit wenigstens einem ersten Edukt A und einem zweiten Edukt B und einem ersten Produkt C und einem zweiten Produkt D, wobei der Membranreaktor (1) eine Membran (2) aufweist, die einen Reaktionsraum (3) von einem Permeatraum (4) trennt und für das zweite Edukt B und das zweite Produkt D permeabel sowie für das erste Produkt C nicht oder nur gering permeabel ist, wobei
- das erste Edukt A druckbeaufschlagt über einen Reaktionsraumeingang (5) dem Reaktionsraum (3) zuführbar ist,
- das zweite Edukt B druckbeaufschlagt über einen Permeatraumeingang (6), dem Permeatraum (4) und die Membran (2) dem Reaktionsraum (3) zuführbar ist, wobei
- der Druck des zweiten Edukts B als Summe aus einem gewünschten Partialdruck im Reaktionsraum (3) und einem Transmembranendruck zum Transport in den Reaktionsraum (3) eingestellt ist, der Reaktionsraum (3) einen ersten Abtrennraum (9) nicht unmittelbar an die Membran (2) angrenzend aufweist, der Permeatraum (4) einen zweiten Abtrennraum (10) nicht unmittelbar an die Membran (2) angrenzend aufweist,
- das erste Produkt C aus dem Reaktionsraum (3) über einen ersten Abtrennraum (9) getrennt von dem ersten Edukt A an einem Reaktionsraumausgang (7) abführbar ist und
- das zweite Produkt D infolge Permeation durch die Membran (2) aus dem Permeatraum (4) über einen zweiten Abtrennraum (10) getrennt von dem zweiten Edukt B an einem Permeatraumausgang (8) abführbar ist.

2. Membranreaktor (1) nach Anspruch 1, wobei im Reaktionsraum (3) eine Katalysatorschüttung vorhanden ist.

3. Membranreaktor (1) nach Anspruch 1 oder 2, wobei die Membran (2) mit einem Katalysator beschichtet ist.

4. Membranreaktor (1) nach einem der Ansprüche 1 bis 3, wobei der erste Abtrennraum (9) einen ersten Wärmetauscher (11) zum Abtrennen des ersten Produktes C vom ersten Edukt A aufweist.

5. Membranreaktor (1) nach einem der Ansprüche 1 bis 4, wobei der zweite Abtrennraum (10) einen zweiten Wärmetauscher (12) zum Abtrennen des zweiten Produktes D vom zweiten Edukt B aufweist.

6. Verfahren für Gleichgewichtsreaktionen mit wenigstens einem ersten Edukt A und einem zweiten Edukt B und wenigstens einem ersten Produkt C und einem zweiten Produkt D mittels einer Membran (2) mit einer Retentatseite und einer Permeatseite, wobei die Membran (2)
- zwischen einem Reaktionsraum (3) und einem Permeatraum (4) angeordnet wird,
- für mindestens das zweite Edukt B und das zweite Produkt D permeabel ist und
- für das erste Produkt C nicht permeabel ist, und wobei
- das erste Edukt A druckbeaufschlagt dem Reaktionsraum (3) auf der Retentatseite der Membran (2) zugeführt wird,
- das zweite Edukt B auf der Permeatseite druckbeaufschlagt in den Permeatraum (4) eingespeist wird, durch die Membran (2) in den Reaktionsraum (3) permeiert und so über einen Transmembranendruck dem Reaktionsraum (3) druckbeaufschlagt zugeführt wird, wobei der Druck des zweiten Edukts B am Permeatraum (4) als Summe aus gewünschtem Partialdruck im Reaktionsraum (3) und dem Transmembranendruck an der Membran (2) eingestellt wird,
- das durch die Membran (2) mit angepasstem Partialdruck permeierte zweite Edukt B mit dem druckbeaufschlagten ersten Edukt A im Reaktionsraum (3) reagiert, sodass das erste Produkt C und das zweite Produkt D entstehen,
- das erste Produkt C aus dem Reaktionsraum (3) über einen ersten Abtrennraum (9) vom ersten Edukt A getrennt abgeführt wird, und
- das zweite Produkt D durch die Membran (2) in den Permeatraum (4) permeiert und aus dem Permeatraum (4) über einen zweiten Abtrennraum (10) vom zweiten Edukt B getrennt abgeführt wird.

7. Verfahren nach Anspruch 6, wobei in den Reaktionsraum (3) eine Katalysatorschüttung eingebracht wurde.

8. Verfahren nach Anspruch 6 oder 7, wobei die verwendete Membran (2) mit dem Katalysator beschichtet wurde.

9. Verfahren nach einem der Ansprüche 6 bis 8, wobei das Abtrennen des ersten Produktes C vom ersten Edukt A mittels eines in dem ersten Abtrennraum (9) befindlichen Wärmetauschers (11) und das Abtrennen des zweiten Produktes D vom zweiten Edukt B mittels eines in dem zweiten Abtrennraum (10) befindlichen Wärmetauschers (12) erfolgen.

10. Verfahren nach einem der Ansprüche 6 bis 9, wobei das erste Edukt A druckgeregelt auf den Gesamtdruck, bei dem die Gleichgewichtsreaktion stattfinden soll, in den Reaktionsraum (3) eingespeist wird, wodurch sich ein Partialdruck des ersten Edukts A aus dem vorgegebenen Gesamtdruck vermindert um den Partialdruck des zweiten Edukts B ergibt.

## Claims

1. A passively self-regulating membrane reactor (1) for carrying out balanced reactions with at least a first reactant A and a second reactant B and a first product C and a second product D, the membrane reactor (1) having a membrane (2) which separates a reaction chamber (3) from a permeate chamber (4) and is permeable to the second reactant B and the second product D and is not permeable or only slightly permeable to the first product C, wherein
- the first reactant A can be fed under pressure to the reaction chamber (3) via a reaction chamber inlet (5),
- the second reactant B can be fed under pressure to the reaction chamber (3) via a permeate chamber inlet (6), the permeate chamber (4) and the membrane (2), wherein
- the pressure of the second reactant B is set as the sum of a desired partial pressure in the reaction chamber (3) and a transmembrane pressure for transport into the reaction chamber (3),
- the reaction chamber (3) has a first separation chamber (9) not directly adjacent to the membrane (2), the permeate chamber (4) has a second separation chamber (10) not directly adjacent to the membrane (2),
- the first product C can be discharged from the reaction chamber (3) via a first separation chamber (9) separately from the first reactant A at a reaction chamber outlet (7), and
- the second product D can be discharged from the permeate chamber (4) via a second separation chamber (10) separately from the second reactant B at a permeate chamber outlet (8) as a result of permeation through the membrane (2).

2. The membrane reactor (1) according to claim 1, wherein a catalyst bed is present in the reaction chamber (3).

3. The membrane reactor (1) according to claim 1 or 2, wherein the membrane (2) is coated with a catalyst.

4. The membrane reactor (1) according to any one of claims 1 to 3, wherein the first separation chamber (9) comprises a first heat exchanger (11) for separating the first product C from the first reactant A.

5. The membrane reactor (1) according to any one of claims 1 to 4, wherein the second separation chamber (10) comprises a second heat exchanger (12) for separating the second product D from the second reactant B.

6. A method for balanced reactions with at least a first reactant A and a second reactant B and at least a first product C and a second product D by means of a membrane (2) having a retentate side and a permeate side, wherein the membrane (2)
- is arranged between a reaction chamber (3) and a permeate chamber (4),
- is permeable to at least the second reactant B and the second product D and
- is not permeable to the first product C, and wherein
- the first reactant A is fed under pressure to the reaction chamber (3) on the retentate side of the membrane (2),
- the second reactant B is fed under pressure into the permeate chamber (4) on the permeate side under pressure, permeates through the membrane (2) into the reaction chamber (3) and is thus fed under pressure to the reaction chamber (3) via a transmembrane pressure, the pressure of the second reactant B at the permeate chamber (4) being set as the sum of the desired partial pressure in the reaction chamber (3) and the transmembrane pressure at the membrane (2),
- the second reactant B permeated through the membrane (2) at the adjusted partial pressure reacts with the pressurised first reactant A in the reaction chamber (3), so that the first product C and the second product D are formed,
- the first product C is discharged from the reaction chamber (3) separately from the first reactant A via a first separation chamber (9), and
- the second product D permeates through the membrane (2) into the permeate chamber (4) and is discharged from the permeate chamber (4) separately from the second reactant B via a second separation chamber (10).

7. The method according to claim 6, wherein a catalyst bed has been introduced into the reaction chamber (3).

8. The method according to claim 6 or 7, wherein the membrane (2) used has been coated with the catalyst.

9. The method according to any one of claims 6 to 8, wherein the separation of the first product C from the first reactant A is carried out by means of a heat exchanger (11) located in the first separation chamber (9) and the separation of the second product D from the second reactant B is carried out by means of a heat exchanger (12) located in the second separation chamber (10).

10. The method according to any one of claims 6 to 9, wherein the first reactant A is fed into the reaction chamber (3) under pressure control to the total pressure at which the balanced reaction is to take place, whereby a partial pressure of the first reactant A results from the predetermined total pressure reduced by the partial pressure of the second reactant B.

## Revendications

1. Réacteur à membrane (1) à autorégulation passive pour réaliser des réactions d'équilibre avec au moins un premier réactif A et un deuxième réactif B et un premier produit C et un deuxième produit D, le réacteur à membrane (1) présentant une membrane (2) qui sépare une chambre de réaction (3) d'une chambre de perméat (4) et qui est perméable pour le deuxième réactif B et le deuxième produit D et qui n'est pas ou seulement peu perméable pour le premier produit C, dans lequel
- le premier réactif A peut être amené sous pression à la chambre de réaction (3) par une entrée de chambre de réaction (5),
- le deuxième réactif B peut être amené sous pression à la chambre de réaction (3) par une entrée de chambre de perméat (6), à la chambre de perméat (4) et à la membrane (2),
- la pression du deuxième réactif B étant réglée comme somme d'une pression partielle souhaitée dans la chambre de réaction (3) et d'une pression transmembranaire pour le transport dans la chambre de réaction (3),
- la chambre de réaction (3) présente une première chambre de séparation (9) non directement adjacente à la membrane (2), la chambre de perméat (4) présente une deuxième chambre de séparation (10) non directement adjacente à la membrane (2),
- le premier produit C peut être évacué de la chambre de réaction (3) par l'intermédiaire d'une première chambre de séparation (9), séparément du premier réactif A, à une sortie (7) de la chambre de réaction et
- le deuxième produit D peut être évacué de la chambre de perméat (4) par suite de la perméation à travers la membrane (2), par l'intermédiaire d'une deuxième chambre de séparation (10), séparément du deuxième réactif B, à une sortie (8) de la chambre de perméat.

2. Réacteur à membrane (1) selon la revendication 1, dans lequel un lit de catalyseur est présent dans la chambre de réaction (3).

3. Réacteur à membrane (1) selon la revendication 1 ou 2, dans lequel la membrane (2) est revêtue d'un catalyseur.

4. Réacteur à membrane (1) selon l'une quelconque des revendications 1 à 3, dans lequel la première chambre de séparation (9) comporte un premier échangeur de chaleur (11) pour séparer le premier produit C du premier réactif A.

5. Réacteur à membrane (1) selon l'une quelconque des revendications 1 à 4, dans lequel la deuxième chambre de séparation (10) comporte un deuxième échangeur de chaleur (12) pour séparer le deuxième produit D du deuxième réactif B.

6. Procédé pour des réactions d'équilibre avec au moins un premier réactif A et un deuxième réactif B et au moins un premier produit C et un deuxième produit D au moyen d'une membrane (2) ayant un côté rétentat et un côté perméat, dans lequel la membrane (2)
- est disposé entre une chambre de réaction (3) et une chambre de perméat (4),
- est perméable au moins pour le deuxième réactif B et le deuxième produit D et
- n'est pas perméable pour le premier produit C, et dans lequel
- le premier réactif A est amené sous pression à la chambre de réaction (3) sur le côté rétentat de la membrane (2),
- le deuxième réactif B est introduit sous pression dans la chambre de perméat (4) du côté perméat, traverse la membrane (2) dans la chambre de réaction (3) et est ainsi amené sous pression dans la chambre de réaction (3) par l'intermédiaire d'une pression transmembranaire, la pression du deuxième réactif B dans la chambre de perméat (4) étant réglée comme la somme de la pression partielle souhaitée dans la chambre de réaction (3) et de la pression transmembranaire sur la membrane (2),
- le deuxième réactif B traverse la membrane (2) avec une pression partielle adaptée réagit avec le premier réactif A soumis à la pression dans la chambre de réaction (3), de sorte que le premier produit C et le deuxième produit D se forment,
- le premier produit C est évacué de la chambre de réaction (3) séparément du premier réactif A via une première chambre de séparation (9), et
- le deuxième produit D traverse la membrane (2) dans la chambre de perméat (4) et est évacué de la chambre de perméat (4) séparément du deuxième réactif B via une deuxième chambre de séparation (10).

7. Procédé selon la revendication 6, dans lequel un lit de catalyseur a été introduit dans la chambre de réaction (3).

8. Procédé selon la revendication 6 ou 7, dans lequel la membrane (2) utilisée a été revêtue du catalyseur.

9. Procédé selon l'une quelconque des revendications 6 à 8, dans lequel la séparation du premier produit C du premier réactif A est réalisée au moyen d'un échangeur de chaleur (11) situé dans la première chambre de séparation (9) et la séparation du deuxième produit D du deuxième réactif B est réalisée au moyen d'un échangeur de chaleur (12) situé dans la deuxième chambre de séparation (10).

10. Procédé selon l'une quelconque des revendications 6 à 9, dans lequel le premier réactif A est introduit dans la chambre de réaction (3) avec une pression régulée à la pression totale à laquelle la réaction d'équilibre doit avoir lieu, ce qui permet d'obtenir une pression partielle du premier réactif A à partir de la pression totale prédéterminée diminuée de la pression partielle du deuxième réactif B.
